# EUROPEAN PATENT APPLICATION

(11) **EP 4 498 493 A1**
(43) Date of publication of application: **29.01.2025**
(21) Application number: 22936648.9
(22) Date of filing: 07.12.2022
(51) Int. Cl.: H01M 50/24, H01M 50/211, H01M 50/271, H01M 10/04

(54) **BATTERY MODULE**

(30) Priority: 04.04.2022 KR 20220041883; 15.11.2022 KR 20220153101
(71) Applicant: LG Energy Solution, Ltd., Seoul 07335 (KR)
(72) Inventor: KANG, Ye Ran, Daejeon 34122 (KR); KIM, Tae Geun, Daejeon 34122 (KR); KANG, Yun Hyeok, Daejeon 34122 (KR); LEE, Young Bin, Daejeon 34122 (KR)
(74) Representative: Plasseraud IP
(86) International application number: PCT/KR2022/019811
(87) International publication number: WO 2023/195595

(57) **Abstract**

The present invention relates to a battery module, in which a separation structure, which is capable of being easily coupled, delays transfer of flame and a high-temperature gas between cells or cell stacks by heat generated therein to improve safety, and which is capable of improving structural rigidity so as not to cause deformation and collapse in structure due to heat.

A battery module according to the present invention includes a cell stack in which a plurality of cells are stacked, and a partition wall disposed between the cell stacks adjacent to each other to separate the cell stacks from each other, wherein the partition wall includes a horizontal partition wall, in which a horizontal coupling space extending in a height direction is formed, and an inner groove extending in the height direction is formed in an inner surface that forms the horizontal coupling space, and a vertical partition wall, which is disposed to be perpendicular to the horizontal partition wall, in which a vertical coupling space disposed extending in the height direction is formed, and which comprises a protrusion engaged with the inner groove on a side surface that is in contact with the horizontal partition wall, wherein a portion of the vertical partition wall is fitted into the horizontal coupling space, and a portion of the horizontal partition wall is fitted into the vertical coupling space, and the inner groove and the protrusion are coupled to be engaged with and fixed to each other.

## Description

### TECHNICAL FIELD

### CROSS-REFERENCE TO RELATED APPLICATION

The present application claims the benefit of the priority of Korean Patent Application Nos. 10-2022-0041883, filed on April 04, 2022, and 10-2022-0153101, filed on November 15, 2022, which are hereby incorporated by reference in their entirety.

### TECHNICAL FIELD

The present invention relates to a battery module, and more particularly, to a battery module including a plurality of cells.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries storing electrical energy may be generally classified into primary batteries and a secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged. When the oxidation reaction to the material is performed by the current, power is discharged. Such charging-discharging are repeatedly performed to generate electricity.

Recently, as the need for large-capacity structures in addition to the use as an energy storage source are increasing, demands for battery packs in which a plurality of secondary batteries or battery modules are aggregated is increasing, and thus, demands for battery modules are also increasing.

When the battery module is used, heat is generated in the cells inside the battery module, and thus, there is a possibility that heat and a high-temperature gas are diffused inside the battery module. Here, the battery module may include a separation structure that prevents heat from being diffused between cell stacks and delays transfer of flame and high-temperature gas.

The separation structure of the battery module according to the related art does not effectively delay the flame and high-temperature gas, the coupling method is complicated, and the flame transfer in a cell unit is difficult to be delayed.

In order to solve this problem, the battery module including a different type of separation structure is required.

### DISCLOSURE OF THE INVENTION

### TECHNICAL PROBLEM

The present invention has been made to solve the above problem, and an object of the present invention is to provide a battery module, in which a separation structure, which is capable of being easily coupled, delays transfer of flame and a high-temperature gas between cells or cell stacks by heat generated therein to improve safety, and which is capable of improving structural rigidity so as not to cause deformation and collapse in structure due to heat.

### TECHNICAL SOLUTION

A battery module according to the present invention includes a cell stack in which a plurality of cells are stacked, and a partition wall disposed between the cell stacks adjacent to each other to separate the cell stacks from each other, wherein the partition wall includes a horizontal partition wall, in which a horizontal coupling space extending in a height direction is formed, and an inner groove extending in the height direction is formed in an inner surface that forms the horizontal coupling space, and a vertical partition wall, which is disposed to be perpendicular to the horizontal partition wall, in which a vertical coupling space disposed extending in the height direction is formed, and which comprises a protrusion engaged with the inner groove on a side surface that is in contact with the horizontal partition wall, wherein a portion of the vertical partition wall is fitted into the horizontal coupling space, and a portion of the horizontal partition wall is fitted into the vertical coupling space, and the inner groove and the protrusion are coupled to be engaged with and fixed to each other.

The battery module may further include a frame configured to surround a bottom surface and a side surface of the cell stack so that the cell stack is disposed therein, wherein a side surface of the horizontal partition wall and an inner surface of the frame may have shapes that are coupled to be engaged with each other.

The horizontal partition wall may have an outer groove extending in the height direction in a side surface that is in contact with the frame, the frame may include a frame protrusion having a shape engaged with the outer groove on an inner surface that is in contact with the horizontal partition wall, and the outer groove and the frame protrusion may be coupled to be engaged with each other.

The horizontal partition wall may include a fixing part extending in an extension direction of the vertical partition wall on an upper portion thereof, wherein the fixing part may be coupled to the vertical partition wall so that the horizontal partition wall and the vertical partition wall are fixed to each other.

The fixing part may include: a fixing horizontal part extending in the extension direction of the vertical partition wall; and a fixing vertical part extending in a height direction of the vertical partition wall from each of both sides of the fixing horizontal part, wherein the vertical partition wall may be fitted to be fixed in a space formed by the fixing horizontal part and the fixing vertical part.

The battery module may further include an end plate disposed on each of front and rear surfaces of the cell stack to cover the front and rear surfaces of the cell stack, wherein the end plate may include a pair of center plates extending in a direction toward the cell stack from one surface facing the cell stack and disposed side by side to be spaced apart from each other by a thickness of the vertical partition wall, and a portion of the vertical partition wall may be fitted between the center plates so that the end plate and the vertical partition wall are fixed to each other.

The cell stack may include an inner wall disposed between the predetermined number of cells to separate the predetermined number of cells from each other.

The cell stack may further include a bus bar frame disposed to be perpendicular to the stacked cells, wherein the bus bar frame may include a pair of extension plates extending in a direction toward the cell from one surface and disposed side by side to be spaced apart from each other by a thickness of the inner wall, and a portion of the inner wall may be disposed to be fitted between the extension plates.

The vertical partition wall may have a vertical connection hole in which a bus bar is disposed so that the adjacent cell stacks are electrically connected to each other.

The horizontal partition wall may have a horizontal connection hole in which a bus bar is disposed so that the adjacent cell stacks are electrically connected to each other.

The partition wall may be coupled to the frame by welding a bottom surface thereof, which is in contact with the frame.

The battery module may further include a ceiling cover disposed on an upper portion of the cell stack,

wherein the partition wall may be coupled to the ceiling cover by welding a top surface thereof, which is in contact with the ceiling cover.

### ADVANTAGEOUS EFFECTS

The battery module according to the present invention may include the cell stack, in which the plurality of cells are stacked and the partition wall disposed between the cell stacks adjacent to each other to separate the cell stacks from each other. The partition wall may include the horizontal partition wall, in which the horizontal coupling space extending in the height direction is formed, and the inner groove extending in the height direction is formed in the inner surface that forms the horizontal coupling space, and the vertical partition wall, which is disposed to be perpendicular to the horizontal partition wall, in which the vertical coupling space disposed extending in the height direction is formed, and which includes the protrusion engaged with the inner groove on the side surface that is in contact with the horizontal partition wall. Here, the portion of the vertical partition wall may be fitted into the horizontal coupling space, the portion of the horizontal partition wall may be fitted into the vertical coupling space, and the inner groove and the protrusion may be coupled to be engaged with and fixed to each other.

Therefore, provided is the battery module, in which the separation structure, which is capable of being easily coupled, delays the transfer of the flame and the high-temperature gas between the cells or the cell stacks by the heat generated therein to improve the safety, and which is capable of improving the structural rigidity so as not to cause the deformation and the collapse in structure due to the heat.

### BRIEF DESCRIPTION OF THE DRAWINGS

FIG. 1 is a schematic exploded perspective view of a battery module according to Embodiment 1 of the present invention.
FIG. 2 is a schematic perspective view illustrating a state in which a partition wall of the battery module is disposed according to Embodiment 1 of the present invention.
FIG. 3 is a schematic perspective view illustrating the partition wall of the battery module according to Embodiment 1 of the present invention.
FIG. 4 is a schematic perspective view illustrating a horizontal partition wall of the battery module according to Embodiment 1 of the present invention.
FIG. 5 is a schematic perspective view illustrating a vertical partition wall of the battery module according to

### Embodiment 1 of the present invention.

FIG. 6 is a schematic perspective view illustrating a frame of the battery module according to Embodiment 1 of the present invention.

FIG. 7 is a schematic perspective view illustrating an end plate of the battery module according to Embodiment 1 of the present invention.

FIG. 8 is a schematic perspective view illustrating a battery module according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

The present invention provides a battery module as Embodiment 1.

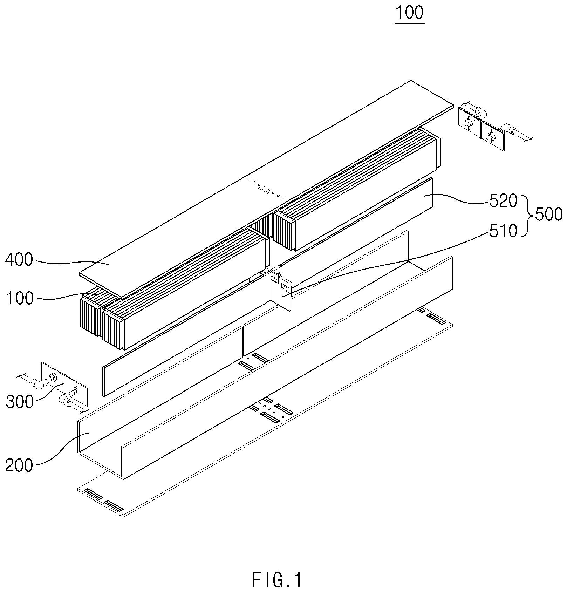

FIG. 1 is a schematic exploded perspective view of a battery module 10 according to Embodiment 1 of the present invention.

Referring to FIG. 1, the battery pack 10 according to Embodiment 1 of the present invention may include a cell stack 100, a frame 200, an end plate 300, a ceiling cover 400, and a partition wall 500.

The cell stack 100 of the battery module 10 may be formed by stacking a plurality of cells 110. Each of the cells 110 may mean one secondary battery, and here, the cell 110 may be a pouch cell. Specifically, the cell stack 100 may be formed by stacking the plurality of cells 110 side by side so as to be parallel to each other.

The cell stack 100 may generate electrical energy of the battery module 10.

The cell stack 100 may be disposed inside the frame 200 of the battery module 10. Here, the frame 200 may be disposed to surround a bottom surface and a side surface of the cell stack 100. The frame 200 according to Embodiment 1 of the present invention may have a U-shape when viewed from the front.

The plurality of cell stacks 100 may be disposed inside the frame 200. For example, four cell stacks 100 may be disposed inside the frame 200 according to Embodiment 1 of the present invention. Here, two cell stacks 100 may be disposed inside the frame 200 in each of two lines.

The cell stack 100 may be disposed inside the battery module 10 while being maintained in its shape by the frame 200, and the frame 200 may protect the cell stack 100 from the outside.

The end plate 300 of the battery module 10 may be disposed on front and rear surfaces of the cell stack 100 while blocking an opening of the frame 200 in which the cell stack 100 is disposed.

The end plate 300 may have a substantially rectangular parallelepiped plate shape and may be formed as a pair that are respectively disposed on front and rear surfaces of the cell stack 100.

The cell stack 100 may be protected from the outside by the end plate 300.

Although not shown in detail in Embodiment 1 of the present invention, a space or the like in which an additional component for electrically connecting the cell stack 100 to the outside is disposed may be formed in the end plate 300.

The ceiling cover 400 of the battery module 10 may be disposed on an upper portion of the cell stack 100.

The ceiling cover 400 may have a substantially rectangular parallelepiped plate shape, and a surface of the ceiling cover 400, which faces the cell stack 100, may have approximately the same area as the bottom surface of the frame 200.

The cell stack 100 may be protected from the outside by the ceiling cover 400.

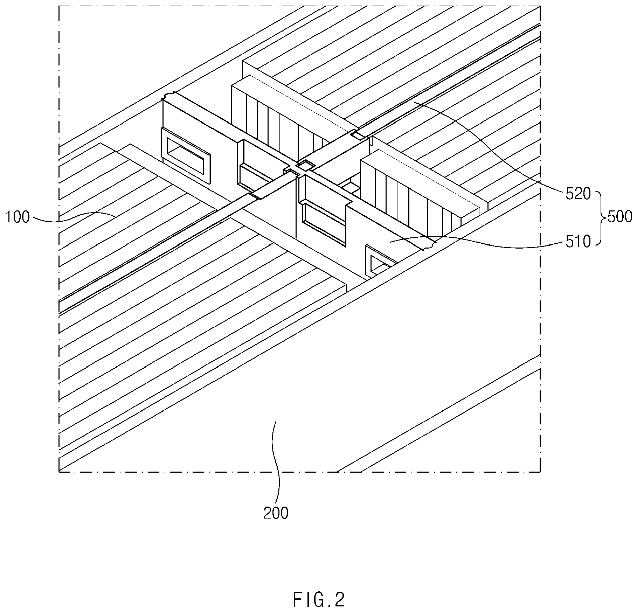

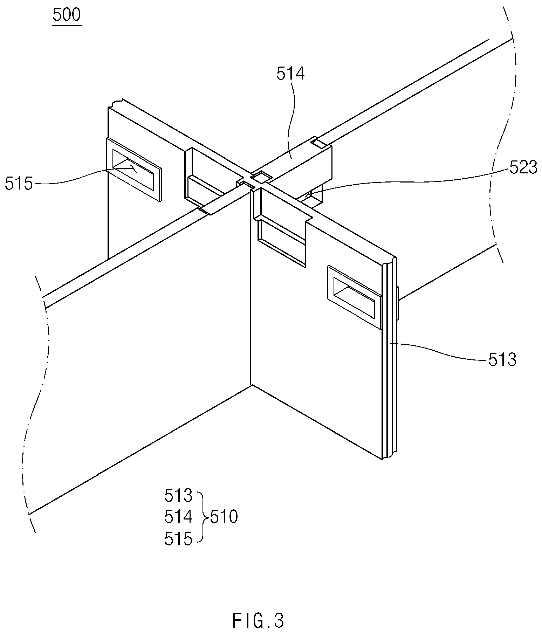

FIG. 2 is a schematic perspective view illustrating a state in which a partition wall 500 of the battery module 10 is disposed according to Embodiment 1 of the present invention, and FIG. 3 is a schematic perspective view illustrating the partition wall 500 of the battery module 10 according to Embodiment 1 of the present invention.

As an example of a configuration for separating the cell stacks 100 from each other, the battery module 10 according to Embodiment 1 of the present invention may include the partition wall 500.

Referring to FIG. 2, the partition wall 500 may be disposed between the adjacent cell stacks 100 to separate the cell stacks 100 from each other. The partition wall 500 may separate the cell stacks 100 from each other to delay diffusion of heat and a high-temperature gas, which are generated in the cell stacks 100 according to the use of the battery module 10, to other adjacent cell stacks 100.

As an example of a configuration for efficiently separating the cell stacks 100 from each other, the partition wall 500 of the battery module 10 according to Embodiment 1 of the present invention includes a horizontal partition wall 510 and a vertical partition wall 520.

Referring to FIG. 3, each of the horizontal partition wall 510 and the vertical partition wall 520 may have a substantially rectangular parallelepiped plate shape. In addition, the horizontal partition wall 510 may be disposed parallel to the end plate 300, and the vertical partition wall 520 may be disposed to be perpendicular to the horizontal partition wall 510. Thus, the four cell stacks 100 of the battery module 10 according to Embodiment 1 may be respectively disposed on four zones divided by the horizontal partition wall 510 and the vertical partition wall 520.

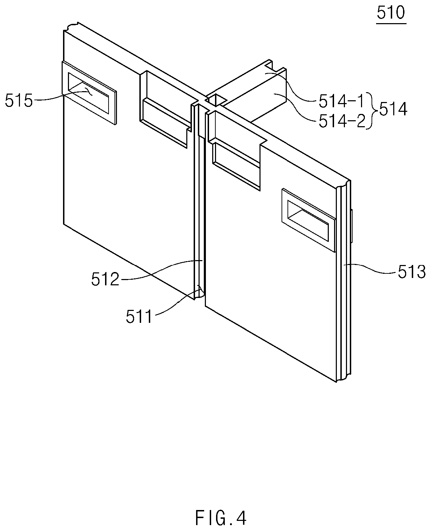

FIG. 4 is a schematic perspective view illustrating the horizontal partition wall 510 of the battery module 10 according to Embodiment 1 of the present invention.

As an example of a configuration for efficient coupling with the vertical partition wall 520, the horizontal partition wall 510 of the partition wall 500 according to Embodiment 1 of the present invention has a horizontal coupling space 511 and an inner groove 512.

Specifically, the horizontal coupling space 511 of the horizontal partition wall 510 may be formed parallel to the end plate 300 to extend in a height direction, and the inner groove 512 of the horizontal partition wall 510 may be formed to extend in the height direction in an inner surface that forms the horizontal coupling space 511.

Referring to FIG. 4, the horizontal coupling space 511 of the horizontal partition wall 510 may be formed to extend by a certain length upward from the bottom, and a width of the horizontal coupling space 511 may be the same as that of the vertical partition wall 520. Thus, while a portion of the vertical partition wall 520 is fitted into the horizontal coupling space 511, the horizontal partition wall 510 and the vertical partition wall 520 may be coupled to each other.

The inner groove 512 of the horizontal partition wall 510 may be formed in the inner surface of the horizontal partition wall 510 forming the horizontal coupling space 511, and the inner surface of the horizontal partition wall 510 may be formed to be curved by the inner groove 512.

The horizontal partition wall 510 may be efficiently coupled to the vertical partition wall 520 by the horizontal coupling space 511 and the inner groove 512 of the horizontal partition wall 510. The coupling method will be described later.

As an example of a configuration for coupling the horizontal partition wall 510 to the frame 200, the horizontal partition wall 510 according to Embodiment 1 of the present invention may have an outer groove 513.

The outer groove 513 of the horizontal partition wall 510 may be formed to extend in a height direction on a side surface that is in contact with the frame 200, and an outer surface of the horizontal partition wall 510 may be formed to be curved by the outer groove 513.

The outer surface of the horizontal partition wall 510 and the frame 200 may be coupled to each other while the outer groove 513 is engaged with the frame protrusion 210 to be described later.

As an example of a configuration for coupling the horizontal partition wall 510 to the vertical partition wall 520, the horizontal partition wall 510 according to Embodiment 1 of the present invention may include a fixing part 514.

The fixing part 514 may be formed on an upper portion of the horizontal partition wall 510 to extend in an extension direction of the vertical partition wall 520. Specifically, the fixing part 514 may include a fixing horizontal part 514-1 and a fixing vertical part 514-2.

The fixing horizontal part 514-1 may be formed to extend from the upper portion of the horizontal partition wall 510 in the extending direction of the vertical partition wall 520. Here, the upper portion of the horizontal partition wall 510 connected to the fixing horizontal part 514-1 may mean a position corresponding to a portion at which the horizontal partition wall 510 and the vertical partition wall 520 cross each other.

The fixing vertical part 514-2 may extend from each of both sides of the fixing horizontal part 514-1 in the height direction of the vertical partition wall 520. Specifically, the fixing vertical part 514-2 may have a shape extending downward from each of both ends of the fixing horizontal part 514-1.

Each of both the fixing horizontal part 514-1 and the fixing vertical part 514-2 of the fixing portion 514 may have a plate shape, and a space may be formed by the plate-shaped fixing horizontal part 514-1 and the plate-shaped fixing vertical part 514-2. Here, the vertical partition wall 520 may be fitted into the space so that the horizontal partition wall 510 and the vertical partition wall 520 are fixed to each other. Also, a width of this space may be the same as that of the vertical partition wall 520.

Therefore, while a portion of the vertical partition wall 520 is fitted into the space formed by the fixing horizontal part 514-1 and the fixing vertical part 514-2, the horizontal partition wall 510 and the vertical partition wall 520 may be coupled to each other.

When the horizontal partition wall 510 and the vertical partition wall 520 are coupled to each other by the fixing part 514 of the horizontal partition wall 510, structural rigidity and stability may be improved.

As an example of a configuration for electrical connection between the cell stacks 100, a horizontal connection hole 515 may be formed in the horizontal partition wall 510 according to Embodiment 1 of the present invention.

A bus bar or the like may be disposed in the horizontal connection hole 515 so that the adjacent cell stacks 100 are electrically connected to each other.

Referring to FIG. 4, the horizontal connection hole 515 may be formed to be connected from one surface to the opposite other surface of the horizontal partition wall 510. A shape of the horizontal connection hole 515 may vary depending on a shape of the bus bar or the like to be disposed.

The bus bar or the like may be disposed in the horizontal connection hole 515, and when the bus bar is disposed, the cell stacks 100 separated with the horizontal partition wall 510 therebetween may be electrically connected to each other.

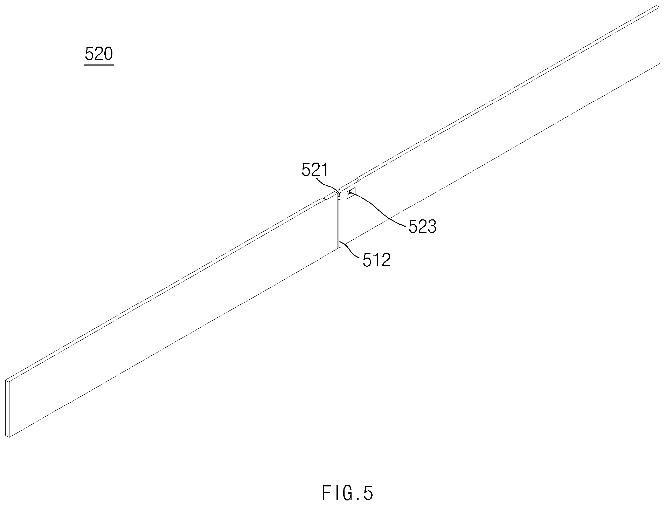

FIG. 5 is a schematic perspective view illustrating the vertical partition wall 520 of the battery module 10 according to Embodiment 1 of the present invention.

As an example of a configuration for efficient coupling with the horizontal partition wall 510, the vertical partition wall 520 of the partition wall 500 according to Embodiment 1 of the present invention may have a vertical coupling space 521 and a protrusion 522.

Specifically, the vertical coupling space 521 of the vertical partition wall 520 may be formed to be disposed to be perpendicularly to the horizontal partition wall 510 and extend in a height direction, and the protrusion 522 of the vertical partition wall 520 may have a shape engaged with the inner groove 512 of the horizontal partition wall 510 on a side surface that is in contact with the horizontal partition wall 510.

Referring to FIG. 5, the vertical coupling space 521 of the vertical partition wall 520 may be formed to be extend by a certain length downward from the upper portion of the vertical partition wall 520, and a width of the vertical coupling space 521 may be the same as that of the horizontal partition wall 510. Thus, while a portion of the horizontal partition wall 510 is fitted into the vertical coupling space 521, the horizontal partition wall 510 and the vertical partition wall 520 may be coupled to each other. That is, while a portion of the horizontal partition wall 510 is inserted into the vertical coupling space 521, the horizontal partition wall 510 and the vertical partition wall 520 may be fixed to each other.

When the horizontal partition wall 510 and the vertical partition wall 520 are coupled to each other, the protrusion 522 of the vertical partition wall 520 may be formed on a side surface that is in contact with the horizontal partition wall 510 and be engaged with the inner groove 512 of the horizontal partition wall 510. A side surface of the vertical partition wall 520 may be formed to be curved by the protrusion 522.

Thus, the inner surface of the horizontal partition wall 510 and the side surface of the vertical partition wall 520 may be coupled to each other while the inner groove 512 and the protrusion 522 are fitted to be engaged with each other. That is, the horizontal partition wall 510 and the vertical partition wall 520 may be fixed to each other while the protrusion 522 is fitted into the inner groove 512. Due to this coupling method, the horizontal partition wall 510 and the vertical partition wall 520 may easily and stably separate the cell stack 100 from each other.

As an example of a configuration for electrical connection between the cell stacks 100, a vertical connection hole 523 may be formed in the vertical partition wall 520 according to Embodiment 1 of the present invention.

A bus bar or the like may be disposed in the vertical connection hole 523 so that adjacent cell stacks 100 are electrically connected to each other.

Referring to FIG. 5, the vertical connection hole 523 may be formed to be connected from one surface of the vertical partition wall 520 to the opposite other surface. A shape of the vertical connection hole 523 may vary depending on a shape of the bus bar or the like to be disposed.

The bus bar or the like may be disposed in the vertical connection hole 523, and when the bus bar is disposed, the cell stacks 100 separated with the vertical partition wall 520 therebetween may be electrically connected to each other.

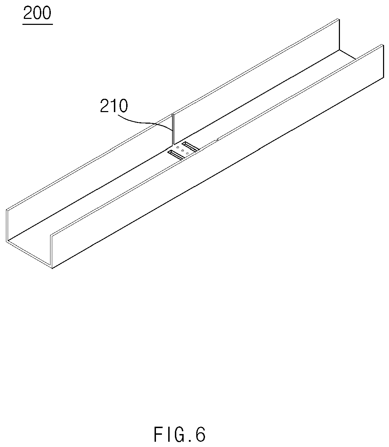

FIG. 6 is a schematic perspective view illustrating the frame 200 of the battery module 10 according to Embodiment 1 of the present invention.

Referring to FIG. 6, the frame 200 may include a frame protrusion 210 on a portion of an inner surface.

The frame protrusion 210 may be formed on the inner surface of the frame 200 that is in contact with the horizontal partition wall 510 and be engaged with the outer groove 513 of the horizontal partition wall 510. Thus, the inner surface of the frame 200 that is in contact with the horizontal partition wall 510 may be formed to be curved by the frame protrusion 210.

The side surface of the horizontal partition wall 510 and the inner surface of the frame 200 may be coupled to each other while the outer groove 513 and the frame protrusion 210 are engaged with each other. In this manner, the horizontal partition wall 510 and the frame 200 may be efficiently coupled to each other.

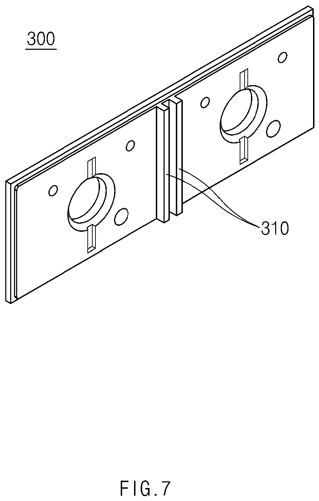

FIG. 7 is a schematic perspective view illustrating an end plate 300 of the battery module 10 according to Embodiment 1 of the present invention.

As an example of a configuration for coupling the vertical partition wall 520 to the end plate 300, the end plate 300 of the battery module 10 according to Embodiment 1 of the present invention may include a center plate 310.

Referring to FIG. 7, the center plate 310 may have a substantially rectangular parallelepiped plate shape and may be formed as a pair. In addition, the pair of center plates 310 of the end plate 300 may extend from one side of the end plate 130 facing the cell stack 100 in a direction toward the cell stack 100 and may be disposed side by side to be spaced apart from each other by a thickness of the vertical partition walls 520.

Here, a space may be formed between the center plates 310, which are spaced apart from each other and disposed side by side, and a portion of the vertical partition wall 520 may be disposed to be fitted between the center plates 310 so that the vertical partition wall 520 is coupled to the end plate 300. That is, the end plate 300 and the vertical partition wall 520 may be fixed to each other while the vertical partition wall 520 is fitted between the central plates 310.

The vertical partition wall 520 may be efficiently coupled to the end plate 300 by the center plates 310.

The partition wall 500 of the battery module 10 according to Embodiment 1 of the present invention may be coupled to the frame 200 by welding a bottom surface thereof, which is in contact with the frame 200, and may be coupled to the ceiling cover 400 by welding a top surface thereof, which is in contact with the ceiling cover 400.

Since surfaces of the partition wall 500 of the battery module 10, which is in contact with the frame 200 and the ceiling cover 400, are coupled to each other by the welding, structural rigidity and stability may be improved.

In the battery module 10 according to Embodiment 1 of the present invention, the partition wall 500, which is capable of being easily coupled, may delay transfer of flame and a high-temperature gas between the cell stacks 100 by heat generated therein to improve safety, and may improve structural rigidity so as not to cause deformation and collapse in structure due to the heat.

### Embodiment 2

The present invention provides another type of battery module 20 as Embodiment 2.

Hereinafter, a detailed description of the same configuration as that of the battery module 10 according to Embodiment 1 of the present invention will be omitted.

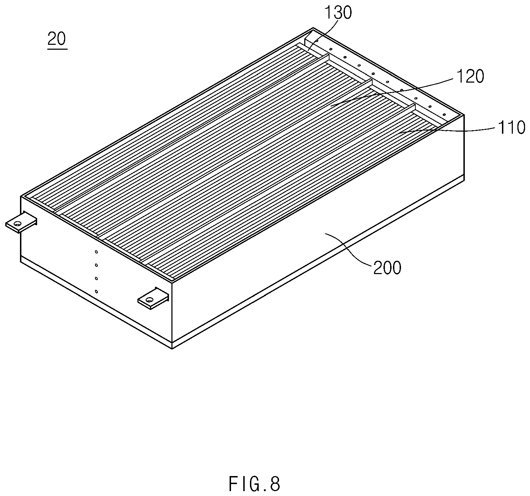

FIG. 8 is a schematic perspective view illustrating a battery module 20 according to Embodiment 2 of the present invention.

As an example of a configuration for separating cells 110 from each other, a cell stack of the battery module 20 according to Embodiment 2 of the present invention may include an inner wall 120.

Referring to FIG. 8, the battery module 20 according to Embodiment 2 may include one cell stack. Here, the one cell stack disposed inside the frame 200 may include the inner wall 120 disposed between the predetermined number of cells 110 to separate the predetermined number of cells 110 from each other.

Thus, the cell stack of the battery module 20 may have a shape in which the certain number of cells 110 and the inner wall 120 are arranged side by side while being sequentially repeated.

The cell stack of the battery module 20 according to Embodiment 2 of the present invention may include the inner wall 120 to reduce an effect of damage and flame generated in the certain number of cells 110 on other adjacent cells 110 and delay transfer of heat.

Although not shown in Embodiment 2 of the present invention, the certain number of cells 110 disposed between the inner walls 120 may be one. Here, since each of the cells 110 is separated by the inner wall 120, the inner wall 120 may delay the transfer of the heat between the cells 110.

The cell stack of the battery module 20 according to Embodiment 2 of the present invention may further include a bus bar frame 130.

Referring to FIG. 8, the bus bar frame 130 may be disposed to be perpendicular to the cells 110 stacked on both sides to form front and rear surfaces of the cell stack. That is, the bus bar frame 130 may be disposed parallel to the end plate 300.

Each of the cells 110 may be electrically connected by the bus bar frame 130.

As an example of a configuration for coupling the inner wall 120 to the bus bar frame 130, the bus bar frame 130 according to Embodiment 2 of the present invention may include an extension plate.

The extension plate may have a substantially rectangular parallelepiped plate shape and may be formed as a pair. In addition, the extension plates of the bus bar frame 130 may extend from one surface of the bus bar frame 130 in a direction toward the cell stack and may be spaced apart from each other by a thickness of the inner wall 120 and disposed side by side.

Here, a space may be formed between the extension plates spaced apart from each other and disposed side by side, and a portion of the inner wall 120 may be disposed to be fitted between the extension plates so that the inner wall 120 is coupled to the bus bar frame 130. Thus, as the number of inner walls 120 increases, the number of extension plates may also increase.

The inner wall 120 may be stably and efficiently coupled to the bus bar frame 130 by the extension plates.

Although not shown in Embodiment 2 of the present invention, the battery module may include a plurality of cell stacks including the inner wall 120.

The battery module 20 according to Embodiment 2 of the present invention may delay transfer of heat between the cells 110 constituting the cell stack to prevent heat diffusion between the cell stacks in advance.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10, 20: Battery module
100: Cell stack
110: Cell
120: Inner wall
130: Bus bar frame
200: Frame
210: Frame protrusion
300: End plate
310: Center plate
400: Ceiling cover
500: Partition wall
510: Horizontal partition wall
511: Horizontal coupling space
512: Inner groove
513: Outer groove
514: Fixing part
514-1: Fixing horizontal part
514-2: Fixing vertical part
515: Horizontal connection hole
520: Vertical partition wall
521: Vertical coupling space
522: Protrusion
523: Vertical connection hole

## Claims

1. A battery module comprising:
a cell stack in which a plurality of cells are stacked; and
a partition wall disposed between the cell stacks adjacent to each other to separate the cell stacks from each other,
wherein the partition wall comprises:
a horizontal partition wall, in which a horizontal coupling space extending in a height direction is formed, and an inner groove extending in the height direction is formed in an inner surface that forms the horizontal coupling space; and
a vertical partition wall, which is disposed to be perpendicular to the horizontal partition wall, in which a vertical coupling space disposed extending in the height direction is formed, and which comprises a protrusion engaged with the inner groove on a side surface that is in contact with the horizontal partition wall,
wherein a portion of the vertical partition wall is fitted into the horizontal coupling space, and a portion of the horizontal partition wall is fitted into the vertical coupling space, and
the inner groove and the protrusion are coupled to be engaged with and fixed to each other.

2. The battery module of claim 1, further comprising a frame configured to surround a bottom surface and a side surface of the cell stack so that the cell stack is disposed therein,
wherein a side surface of the horizontal partition wall and an inner surface of the frame have shapes that are coupled to be engaged with each other.

3. The battery module of claim 2, wherein the horizontal partition wall has an outer groove extending in the height direction in a side surface that is in contact with the frame,
the frame comprises a frame protrusion having a shape engaged with the outer groove on an inner surface that is in contact with the horizontal partition wall, and
the outer groove and the frame protrusion are coupled to be engaged with each other.

4. The battery module of claim 1, wherein the horizontal partition wall comprises a fixing part extending in an extension direction of the vertical partition wall on an upper portion thereof,
wherein the fixing part is coupled to the vertical partition wall so that the horizontal partition wall and the vertical partition wall are fixed to each other.

5. The battery module of claim 4, wherein the fixing part comprises:
a fixing horizontal part extending in the extension direction of the vertical partition wall; and
a fixing vertical part extending in a height direction of the vertical partition wall from each of both sides of the fixing horizontal part,
wherein the vertical partition wall is fitted to be fixed in a space formed by the fixing horizontal part and the fixing vertical part.

6. The battery module of claim 1, further comprising an end plate disposed on each of front and rear surfaces of the cell stack to cover the front and rear surfaces of the cell stack,
wherein the end plate comprises a pair of center plates extending in a direction toward the cell stack from one surface facing the cell stack and disposed side by side to be spaced apart from each other by a thickness of the vertical partition wall, and
a portion of the vertical partition wall is fitted between the center plates so that the end plate and the vertical partition wall are fixed to each other.

7. The battery module of claim 1, wherein the cell stack comprises an inner wall disposed between the predetermined number of cells to separate the predetermined number of cells from each other.

8. The battery module of claim 7, wherein the cell stack further comprises a bus bar frame disposed to be perpendicular to the stacked cells,
wherein the bus bar frame comprises a pair of extension plates extending in a direction toward the cell from one surface and disposed side by side to be spaced apart from each other by a thickness of the inner wall, and
a portion of the inner wall is disposed to be fitted between the extension plates.

9. The battery module of claim 1, wherein the vertical partition wall has a vertical connection hole in which a bus bar is disposed so that the adjacent cell stacks are electrically connected to each other.

10. The battery module of claim 1, wherein the horizontal partition wall has a horizontal connection hole in which a bus bar is disposed so that the adjacent cell stacks are electrically connected to each other.

11. The battery module of claim 2, wherein the partition wall is coupled to the frame by welding a bottom surface thereof, which is in contact with the frame.

12. The battery module of claim 1, further comprising a ceiling cover disposed on an upper portion of the cell stack,
wherein the partition wall is coupled to the ceiling cover by welding a top surface thereof, which is in contact with the ceiling cover.
